# EUROPEAN PATENT APPLICATION

(11) **EP 2 503 418 A2**
(43) Date of publication of application: **26.09.2012**
(21) Application number: 12159366.9
(22) Date of filing: 14.03.2012
(51) Int. Cl.: G05B 19/042

(54) **Control system with state capture and restoration**

(30) Priority: 22.03.2011 US 201113069331
(71) Applicant: General Electric Company, Schenectady, NY 12345 (US)
(72) Inventor: Kunchakoori, Naresh, 500081 Hyderabad (IN); Mutyalpati, Rajaneesh Krishna, 500081 Hyderabad (IN); Duvvuri, Muralidhar Venkata Subrahmanya, 500081 Hyderabad (IN); Paul, Antony John, 500081 Hyderabad (IN); Sundaram, Signesh Rajev, 500081 Hyderabad (IN)
(74) Representative: Picker, Madeline Margaret

(57) **Abstract**

A method is provided for saving the state (44) of a real-time controller (26). The method includes receiving a command (43) to save a state (44) of a controller (26) coupled to an industrial system (10), wherein the controller (26) comprises a processor (32) and a non-volatile memory (42), capturing the state (44) of the controller (26) during control and monitoring of the industrial system (10), and writing the captured state (44) to the non-volatile memory (42) of the controller (26).

## Description

### BACKGROUND OF THE INVENTION

The subject matter disclosed herein relates to control systems, and, more specifically, to configuring programmable controllers.

Control systems for processes, plants, and equipment, may include a wide variety of logic to configure how the control system monitors and controls the processes, plants and equipment. A control system may include one or more programmable controllers. In certain applications, the control system may include a redundant configuration of two, three, or more programmable controllers. Each controller may execute logic designed to monitor and control the process, plant, and/or equipment controlled by the controller. The controllers may be changed to optimize the process, plants, and equipment. Additionally, it may be useful to perform root cause analysis (RCA) and other analysis routines on the controllers in the event of unexpected behavior of the process, plants, or equipment or for diagnostic purposes.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first embodiment, a method includes receiving a command to save a state of a controller coupled to an industrial system, wherein the controller comprises a processor and a non-volatile memory, capturing the state of the controller during control and monitoring of the industrial system, and writing the captured state to the non-volatile memory of the controller

In a second embodiment, a system includes a controller that includes a processor and a non-volatile memory coupled to the processor. The non-volatile memory comprises instructions for capturing the state of the controller, wherein the controller controls and monitors an industrial system coupled to the controller and writing the captured state to the non-volatile memory of the controller, wherein the captured state comprises state variables and process variables of the controller

In a third embodiment, a method includes providing a command to a controller to capture a state of the controller, copying the captured state from the controller to a workstation, loading the captured state in a simulation of a virtual controller, wherein the virtual controller emulates the controller, and executing the simulation in the virtual controller.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a schematic diagram of an implementation of a control system in accordance with an embodiment of the present invention;
FIG. 2 is a block diagram of the controller of the control system of FIG. 1 in accordance with an embodiment of the present invention;
FIG. 3 is a block diagram of the controller of FIG. 1 depicting capturing of a state in accordance with an embodiment of the present invention;
FIG. 4 is a block diagram of the controller and workstation of FIG. 1 illustrating receiving a command, capturing and saving a state in accordance with an embodiment of the present invention; and
FIG. 5 is a flowchart for capturing and analyzing a state of a controller in accordance with an embodiment of the present invention.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

Embodiments of the present invention include a control system that captures the state of a controller during control and monitoring of a system. The captured state may include process variables, state variables, diagnostic information, event information, and alarm information. The captured state may be stored on a non-volatile memory of the controller. The captured state may be copied from one platform to another platform, such as a workstation. The captured state may be loaded in a virtual controller and simulation executing on the workstation. A model state appropriate for the captured state may be loaded from a database and a simulation of the captured state may be performed.

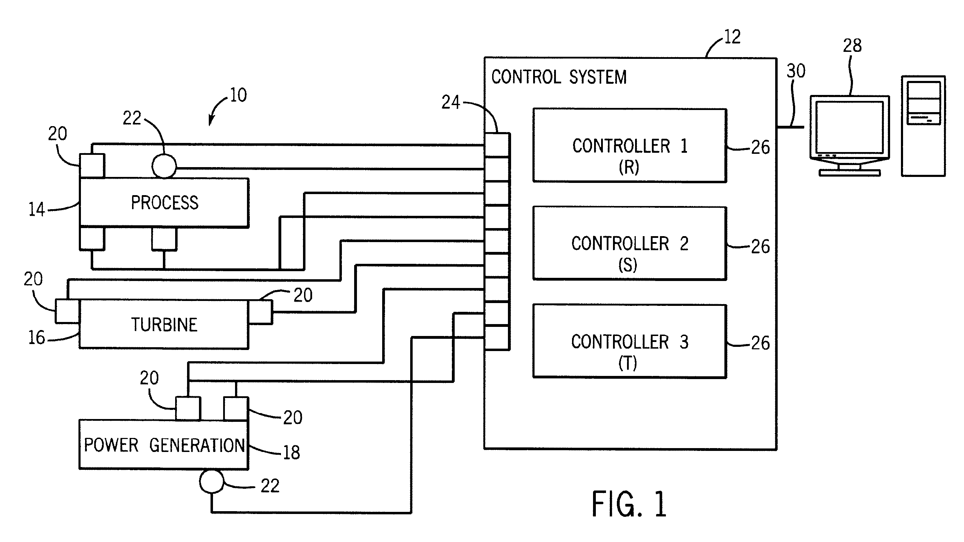

FIG. 1 depicts an industrial system 10, e.g., a plant, coupled to a control system 12 in accordance with an embodiment of the present invention. The system 10 may include, for example, a process 14, a turbine 16, a power generation component 18, or any other component or combination thereof. In other embodiments, the system 10 may include a gasifier, a gas treatment system, (e.g., acid gas removal), an air separation unit, or other process or components. The process 14 may comprise a variety of operational components, such as electric motors, valves, actuators, sensors, or a myriad of manufacturing, processing, material handling and other applications. Further, the process 14 may comprise control and monitoring equipment for regulating process variables through automation and/or observation. The turbine 16 may include a steam turbine, a gas turbine, a wind turbine, a hydro turbine, or any combination thereof. For example, the turbine 16 may include a combined cycle having a gas turbine, a steam turbine, and a heat recovery steam generation (HRSG) system. Furthermore, the turbine 16 may drive the power generation component 18, which may include an electrical generator or a mechanical drive such as a compressor. Alternatively, in some embodiments the turbine 14 and/or the power generation component may be solar-powered. The turbine 16 and power generation component 18 may include any number of operational components, such as motors, rotary components, power electronics, sensors, actuators, etc.

The illustrated process 14, turbine 16, and power generation component 18 may include any number of sensors 20 and actuators/motors 22. The sensors 20 may comprise any number of devices adapted to provide information regarding process conditions. For example, the sensors 20 may monitor temperature, pressure, speed, fluid flow rate, vibration, noise, exhaust emissions, power output, clearance, or any other suitable parameter The actuators 22 may similarly include any number of devices adapted to perform a mechanical action in response to an input signal. For example, the actuators 22 may control a fuel injection rate, a diluent or water injection rate, a coolant rate, a power output level, a speed, a flow rate, a clearance, and so forth

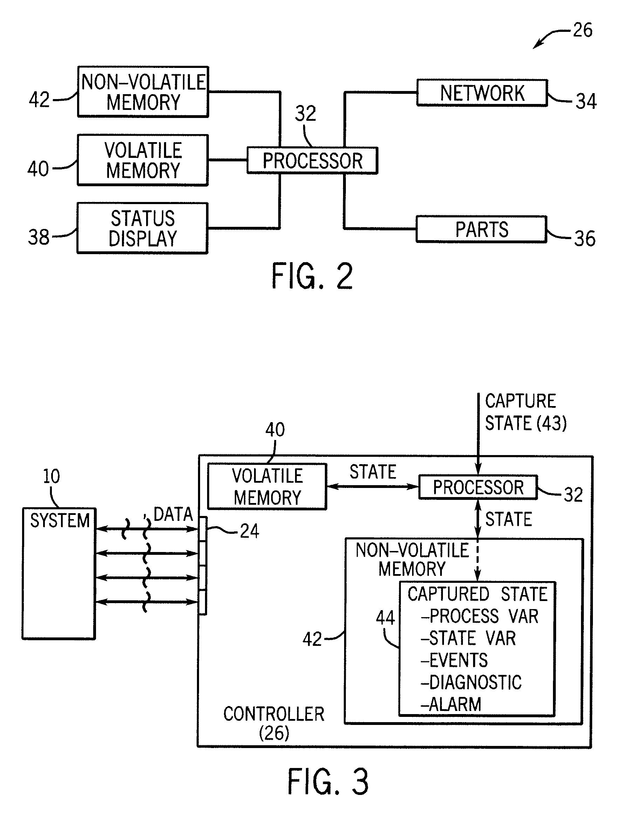

As illustrated, these sensors 20 and actuators 22 are in communication with the control system 12, such as through input/outputs 24. The control system 12 may include one, two, three, or more controllers 26 (e.g., programmable logic controllers) that may operate in any manner suitable for monitoring and controlling the system 10. For example, FIG. 1 depicts a system having three controllers, Controller 1, Controller 2, and Controller 3. The controllers 26 may also be referred to as "real-time controllers," wherein a real-time controller is a tangible and physical controller having the components described below in FIG. 2 for real-time control and monitoring of an industrial system.

The sensors 20 and actuators 22 may be in direct communication with any or all of the controllers 26 through the input/outputs 24. The input/outputs 24 may be packs, cards, or other devices coupled to or integral with the controllers 26. Additionally, the input/outputs 24 may be coupled to and communicate with the controller through suitable components, such as a network (e.g., Ethernet) and switches. These devices may be utilized to operate process equipment. Indeed, they may be utilized within process loops that are monitored and controlled by the control system 12 and the controllers 26. In certain embodiments, the controllers 26 may be separate and/or integral with the process 14, the turbine 16, and/or the power generation component 18. In one embodiment, the control system 12 may be a Mark VIe control system manufactured by General Electric Company of Salem, Virginia.

Additionally, the control system 12 may be coupled to and communicate with one or more work stations 28. The work stations 28 may include a desktop, laptop, or any other suitable electronic device. The workstations 28 may be coupled to the control system 12 through a wired or wireless network 30, such as wired or wireless Ethernet. The workstations 28 may be used as a human-machine interface (HMI) for the control system 12 may enable an operator or engineer to configure and, monitor the components of the control system 12, such as the controllers 26 and the input/outputs 24.

FIG. 2 depicts various components of one of the controllers 26 in accordance with an embodiment of the present invention. The controller 26 may include a processor 32, a network device 34, ports 36, a status display 38, volatile memory 40, and non-volatile memory 42. The processor 32 may execute instructions for operation of the controller 26, such as instructions stored in the volatile memory 40 and non-volatile memory 42. The network device 34 may include one or more network devices for communication with the workstations 28, input/outputs 24, and the other controllers 26. For example, the network device 34 may include one or more wired or wireless Ethernet devices. The ports 36 may include ports for physically connecting the controller 26 to other devices. The ports may include Ethernet ports, USB ports, COM ports, etc. The status display 38 may include a display for indicating the status of the controller 26 and may include light-emitting diodes (LEDs), liquid crystal displays (LCDs), and OLED displays.

Additionally, as mentioned above, the controller 26 may include volatile memory 40 and non-volatile memory 42. The volatile memory 40 may include random access memory (RAM), such as DRAM. The non-volatile memory 42 may include flash memory, phase change memory, resistive memory, or any other suitable non-volatile memory. Additionally, in some embodiments the non-volatile memory 42 may include magnetic storage devices such as hard drives, tape drives, etc. As described below, the non-volatile memory 42 may, in response to a state capture operation of the controller 26, store the captured state information. The state information may be later accessed from the non-volatile memory 42 by the controller 26 or by other devices, such as the workstation 28.

FIG. 3 depicts capture of the state of the controller 26 in accordance with an embodiment of the present invention. As mentioned above, the captured state may be saved from one platform, e.g., the controller 26, to another platform, e.g., the workstation 28. As described above, the controller 26 may receive/send data from/to the various controlled components of the system 10, such as from the sensor 20 and actuators 22 of the process 14, turbine 16, and/or power generation 18, through the inputs/outputs 24.

Upon receiving a "capture state" command 43 (also referred to as "save state" command), the processor 32 of the controller 26 may write state information to the volatile memory 40 and then later write the state information to the non-volatile memory 42 to save a captured state 44. The "capture state" may be received over a wired or wireless network, such as through the network device 34. In some embodiments, the capturing of the state may be performed during the process of a reboot of the controller 26. In other embodiments, the state information may be first written to the non-volatile memory 42 without writing the state information in the volatile memory 40. The state capture may occur during operation of the controller 26 without rebooting the controller 26. The captured stated 44 may include the data received by the controller 26 from the components of the system 10. The captured state 44 may also include operational information from the controller 26, such as information that may be stored in volatile memory 40 and used by controller 26 to control and monitor the system 10. For example, as shown in FIG. 3, the captured state 44 may include process variables, state variables, event information, control constants information, diagnostic information, and alarm information. As described below, the captured state 44 may be saved as a file for copying to another platform. In some embodiments, the volatile memory 40 and/or non-volatile memory 42 may also include a buffer that stores commands executed by the controller 26. The commands may also be captured in the captured state 44 and, as described below, the commands may be replayed in a simulation on a virtual controller. Additionally, the captured state 44 may be time-tagged to include the date and time of the captured information. In some embodiments, the states may be continuously captured to produce continuous captured states. The continuous captured states may be replayed in a virtual controller to analyze the different states over a time interval.

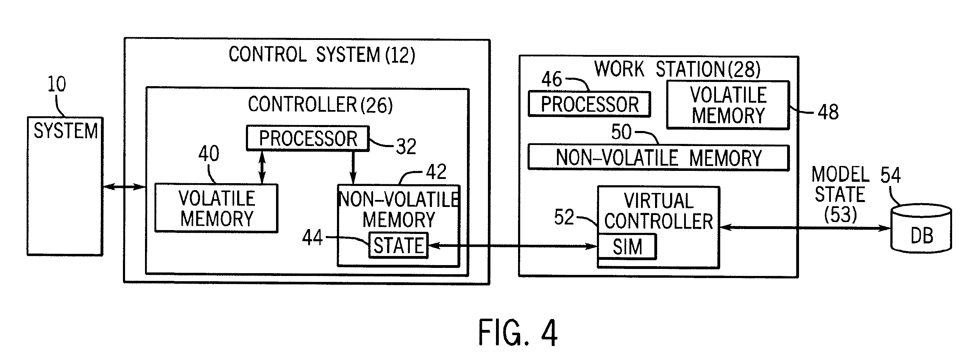

FIG. 4 depicts saving of the captured state between the controller 26 and the workstation 28 in accordance with an embodiment of the present invention. As described above in FIG. 3 and shown again in FIG. 4, the non-volatile memory 42 may store a captured state 44 that includes state information of the controller 26. In some embodiments, the captured state 44 may be accessed by the workstation 28 for analysis and/or simulation.

As shown in FIG. 4, the workstation 28 may include a processor 46, volatile memory 48, and non-volatile memory 50, as well as other components such as display, input devices, etc. The workstation 28 may store and execute a virtual controller 52, i.e., a software emulation of the controller 26. The virtual controller 52 may emulate the controller 26 on the workstation 28 and may execute simulations of the system 10. In one embodiment, the virtual controller 52 is a Mark VIe virtual control manufactured by General Electric Company of Salem, Virginia. In some embodiments, the virtual controller 52 may be combined with other simulation software, such as ARTEMIS manufactured by General Electric Company of Salem, Virginia

As shown in FIG. 4, the workstation 28 may access (e.g., copy) the captured state 44 stored on the controller 26. The captured state 44 may be restored in the virtual controller 52 executing on the workstation 28. ARTEMIS may also load a model state 53 that matches the captured state 44 from a database 54. For example, a simulation executing in ARTEMIS may use the captured state 44 in the Virtual Controller 52 and the model state 53 in a modeling environment to progress the simulation for analysis of the simulation in view of the captured state 44. In other embodiments, other simulation software may be used, such as ProTRAX manufactured by TRAX International of Las Vegas, Nevada.

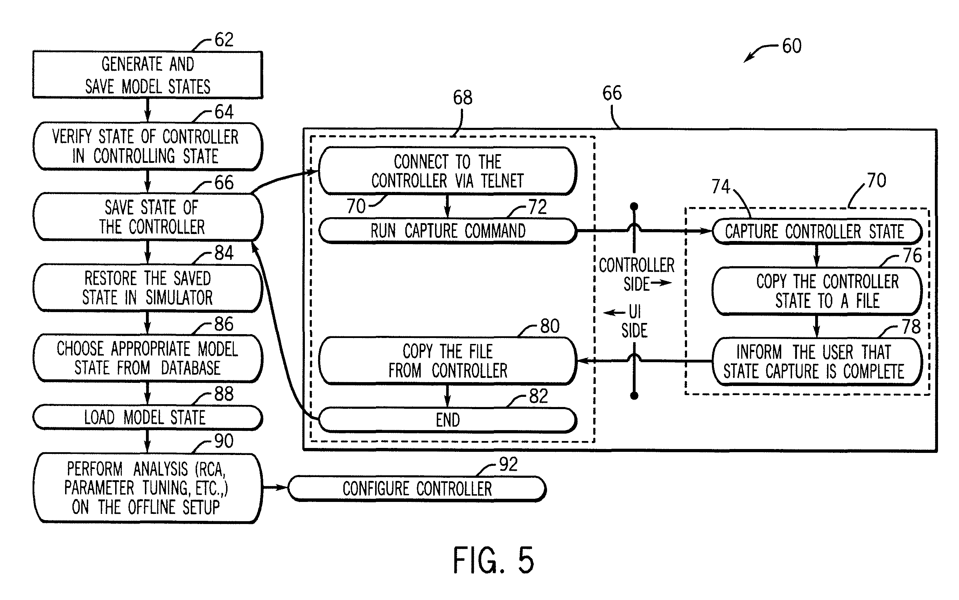

FIG. 5 depicts a process 60 for capturing the state of the controller 26 and restoring the state in the virtual controller 52 in accordance with an embodiment of the present invention. Some or all of the process 60 may be implemented in non-transitory tangible computer-readable media, such as the volatile memory 40 and/or non-volatile memory 42 of the controller 26 and the volatile memory 48 and non-volatile memory 50 of the workstation 28. Initially, model states for different systems may be generated and saved in the database 52 (block 62). The model states may be based on specific parameters of interest and may include different states for the process, turbines, and power generation systems. The model states may correspond to multiple modeling environments and may be used on multiple workstations.

Next, the controller 26 of the control system 12 may be verified to be in a controlling state (block 64). If the controller 26 is in the controlling state, the state of the controller 26 may be captured (block 66), as further illustrated in expanded block 66. The expanded block 66 depicts a process 68 for another platform, such as the workstation 28, and a process 70 for the controller 26. A user may use an interface on the workstation 28 to connect to the controller 26 over the network 30 using a suitable network protocol, such as Telnet (block 70). The user may initiate a capture state command on the controller 26 (block 72). In response to the command, the controller 26 may capture the state of the controller 26 (block 74), such as by writing the state information to the volatile memory 40 and then to the non-volatile memory 42, or directly to the non-volatile memory 42. As described above, the captured state may include process variables, state variable, diagnostic information, alarm information, and event information. Additionally, in other embodiments, the captured state may include captured commands from the controller 26.

The controller 26 may save the captured state to a file stored in the non-volatile memory of the controller 26 (block 76). Next, the controller 26 may send a message to the workstation 28 indicating completion of the state capture (block 78). Upon receiving the completion message, the workstation 28 may copy or move the captured state file from the controller 26 (block 80) and end the captured state operation (block 82). In some embodiments, the state of the controller 28 may be continuously captured. In such an embodiment, the state capture on the controller (blocks 74 and 76) may be performed repeatedly to capture the state over a period of time. Each state captured by the controller 28 may be captured after a time delay, such as about every 1 second, 2 second, 3 second, 4 seconds, or every 5 seconds or above.

After receiving the captured state, the captured state may be restored in a simulation of the virtual controller 52 (block 84). The virtual controller 52 may choose an appropriate model state from the database 54 that matches the captured state (block 86). As mentioned above, this selection may be based on the state information of the captured state, including variables such as load, etc. ARTEMIS may load the model state from the database 54 into the simulation with the captured state information (block 88). The simulation may then be analyzed offline from the controller 26 (block 90). The simulation may be progressed to allow analysis of a part of the system 10 in a step-by-step or continuous manner. As discussed above, the captured state may also include commands executed on the controller 26, and these commands may be replayed in the virtual controller and the simulation. In some embodiments, the captured stated may be loaded before any commands executed on the controller to ensure proper correspondence with the state of the controller. The analysis may include root cause analysis (RCA), parameter turning, etc. After analysis of the simulation, configuration changes, such as optimizations, may be implemented in the controller 26 (block 92). In some embodiments, control constants of the virtual controller from the captured state may not be restored or may be changed to aid in turning of the system 10.

Technical effects of the invention include capturing of the real-time state of a controller for a system such as a process, turbine, or power generation system, without rebooting or interrupting operation of the controller. Moreover, the capturing of the real-time state may be performed during the process of a reboot. Additional technical effects include copying of the captured state from one platform, e.g., a controller, to another platform, e.g., a workstation, and loading of the captured state in a simulation of a virtual controller on the workstation.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A non-transitory tangible machine-readable medium comprising instructions for:
   providing a command to a controller to capture a state of the controller;
   copying the captured state from the controller to a workstation;
   loading the captured state in a simulation of a virtual controller, wherein the virtual controller emulates the controller; and
   executing the simulation of the virtual controller.
2. The non-transitory tangible machine-readable medium of clause 1, comprising instructions for loading a model state from a database coupled to the workstation.
3. The non-transitory tangible machine-readable medium of clause 2, wherein executing the simulation comprises progressing through the model state and the captured state.
4. The non-transitory tangible machine-readable medium of any one of clauses 1 to 3, wherein loading the captured state comprises not restoring or changing control constants of the virtual controller.

## Claims

1. A method, comprising:
receiving a command (43) to save a state (44) of a controller (26) coupled to an industrial system (10), wherein the controller (26) comprises a processor (32), and a non-volatile memory (42);
capturing the state (44) of the controller (26) during control and monitoring of the industrial system (10); and
writing the captured state (44) to the non-volatile memory (42) of the controller (26).

2. The method of claim 1, comprising writing the captured state (44) to a volatile memory (40) of the controller (26).

3. The method of claim 1 or claim 2, comprising receiving data at the controller (26) from sensors (20) of the industrial system (10), from actuators (22) of the industrial system (10), or a combination thereof.

4. The method of any preceding claim, wherein the state (44) comprises process variables of the controller (26), state variables of the controller (26), or a combination thereof.

5. The method of any preceding claim, wherein the state (44) comprises diagnostic information, event information, alarm information, or a combination thereof.

6. The method of any preceding claim, wherein capturing the state (44) comprises capturing commands executed by the controller (26).

7. The method of any preceding claim, wherein receiving the command (43) comprises receiving the command (43) over a wired or wireless connection (34).

8. The method of any preceding claim, comprising controlling and monitoring the industrial system (10) via the controller (26), wherein the industrial system (10) comprises a process (14), a turbine (16), a power generation system (18), or a combination thereof.

9. A system (12), comprising:
a controller (26), comprising:
a processor (32);
a non-volatile memory (42) coupled to the processor (32), wherein the non-volatile memory (42) comprises instructions for:
capturing the state (44) of the controller (26), wherein the controller (26) controls and monitors an industrial system (10) coupled to the controller (26); and
writing the captured state (44) to the non-volatile memory (42) of the controller (26), wherein the captured state (44) comprises state variables and process variables of the controller (26).

10. The system of claim 9, wherein the controller (26) comprises a plurality of input/outputs (24) that receive data from a plurality of sensors (20) of the industrial system (10).

11. The system of claim 9 or claim 10, comprising a workstation (28) coupled to the controller (26).

12. The system of claim 11, wherein the non-volatile memory (42) comprises instructions for receiving a capture state (44) command from the workstation (28).

13. The system of claim 11 or claim 12, wherein the non-volatile memory (42) comprises instructions for copying the captured state (44) from the controller (26) to the workstation (28).

14. The controller (26) of any one of claims 11 to 13, wherein the workstation (28) comprises a virtual controller (52).

15. The controller (26) of any one of claims 9 to 14, wherein the captured state (44) comprises event information, diagnostic information, and alarm information of the controller (26).
